Europäisches Patentamt

European Patent Office

Office européen des brevets

(11) Publication number: **0 007 327**
A1

# EUROPEAN PATENT APPLICATION

(21) Application number: **78300167.0**

(22) Date of filing: **19.07.78**

(51) Int. Cl.³: **A 22 B 5/04**
**A 61 L 2/04, A 61 D 1/14**

(43) Date of publication of application:
**06.02.80** Bulletin **80/3**

(84) Designated Contracting States:
**BE CH DE FR GB LU NL SE**

(71) Applicant: **PROTEAN (HOLDINGS) LIMITED**
**147 Barkly Avenue**
**Richmond Victoria(AU)**

(72) Inventor: **Ebsworth, Edmund Bruce**
**10 Lindsay Street**
**McKinnon Victoria(AU)**

(74) Representative: **Cline, Roger Ledlie et al,**
**c/o A. POOLE & CO. 54 New Cavendish Street**
**London W1M 8HP(GB)**

(54) Method and apparatus for collection of blood from animals.

(57) A method of collecting blood from an animal in which a stunned animal is suspended from a conveyor while a portion of hide is stripped to expose an area adjacent a major blood vessel. A sterilized piercing instrument is inserted into said blood vessel. The blood is conducted to a container which is supported on a separate conveyor system running parallel to the conveyor. The instrument comprises an elongate flat and pointed blade (11) provided with two spaced coplanar limb portions (11b) and outwardly bowed retaining rods (18,20). The blade is attached to a body (14) holding a handle (26) which defines a passageway (30) to the end opening (31) of which a conduit may be connected. A passageway (30a) opens laterally into passageway (30) for dripping anticoagulant additive. A sterilizing unit is also disclosed comprising a hollowbody to receive the piercing instrument in which it is flushed with hot and cold water.

./...

Croydon Printing Company Ltd.

FIG.1.

This invention relates to an improved method and apparatus for collection of blood from animals.

Although it has been appreciated that animal blood has a wide use, particularly as a source of protein, it has not so far been possible to remove the blood from the animal, and to subsequently handle it, in such a manner that it would meet the various standards laid down by health authorities for the handling of constituents for foodstuffs.

It is therefore the object of this invention to provide a method and an instrument which will enable the blood to be collected from a slaughtered animal in a sterile condition.

With this object in view there is provided a a method of collecting blood from an animal comprising suspending a stunned animal, stripping a portion of the hide of the animal to expose an area adjacent a major artery or vein of the animal, inserting a sterilized self piercing hollow instrument through the exposed area into the vein or artery and conducting the blood in a sterile manner from the instrument to a container in which the blood is thereby collected.

The instrument may remain in the animal as it moves with a conveyor until bleeding is completed which in a normal size cow or bullock is approximately three minutes. It will be appreciated that as the animal is initially in a stunned condition the animal's heart will pump the blood from the animal's body through the instrument and into the container. Upon removal of the instrument it is preferably sterilized and subsequently returned down the conveyor line for use on a subsequent animal.

The method may further include inspecting the condition of the carcass of the animal following completion of blood collection and selectively directing the blood collected in the container to one of a plurality of further storages in dependence on said inspection.

The invention also provides an instrument for taking blood from an animal comprising a body defining a passageway therethrough and a pair of openings from the passageway to one of which a conduit may be connected, and piercing element supported in or in adcance of the other of said openings.

The instrument may comprise a hollow tube having an opening intermediate the ends of the tube to which a conduit may be connected, and a piercing element supported in the tube for selective axial movement therein between an extended position projecting from one end of the tube to a retracted position in the tube substantially between the branch and the other end of the tube. The piercing element may be carried on a rod which extends through the other end of the tube in a sealed relation and has an external handle to permit manually controlled movement of the piercing element between the extended and retracted positions.

The instrument may alternatively comprise an elongate blade which projects from an end portion of the instrument, the said end portion having a lengthwise passageway therethrough and retaining means operable to oppose withdrawal of the blade once inserted into an animal whereby the said passageway, when brought into communication with a vein or artery of an animal by virtue of said insertion, tends to be maintained so positioned for flow of blood from the

-3-

animal through the passageway exteriorally of the animal. The said retaining means may comprise a pair of outwardly bowed rods extending from a forward part of the said end portion to locations towards the free end of the said blade, but to opposite sides thereof. The blade may comprise a pointed, flat, tip portion with generally coplanar side edge portions extending from the tip portion to the said end portion of the instrument, these being spaced one from the other to define a central opening through the blade which opening communicates with the said passageway. The said end portion may have a forwardly tapered formation from which the blade projects. The rods preferably diverge forwardly from the end portion to a maximum spacing and thence converge to be points where they are secured to opposite sides of the blade.

The said retaining means may, alternatively or additionally, comprise a pair of retractable blade elements which can be moved from positions within the said end portion to laterally projecting positions, by, for example, operation of a lever on the said end portion. These blades may be retained in transversely extending openings and biased, for example by springs, inwardly so as normally not to project from the openings and the said lever may be connected to a mechanism engaging inner ends of the blades, the lever being movable by for example, rotation about a lengthwise extending axis of the instrument, to cause the blades to be extended to their laterally projecting positions.

The invention also provides a sterilizing unit suitable for use with the above-described instrument, comprising a hollow body opened at one end to receive in sealed relation the end of the instrument which is inserted into the animal, clamp means to hold the instrument in sealed relation with the hollow body and means to selectively flush the instrument with cold, hot and cold water in sequence. Conveniently the hollow body is so proportioned that that portion of the instrument which enters the animal's body is enclosed within the hollow body during the sterilizing operation and is subjected both internally and externally to sterilizing treatment.

In one practical arrangement a plurality of sterilizing units are suspended from a conveyor which passes the point on the main animal conveyor at which the instruments are removed from the animal. The operator inserts the instrument into the open end of the hollow body of the sterilizer and operates an eccentric clamp device which causes the end of the hollow body to grip the external wall of the instrument. The hollow body carries internally an O ring which forms a seal between the hollow body and the instrument for the subsequent hot and cold water flushing treatments. Each sterilizer unit and the attached instrument back to the location on the main animal conveyor at which the instruments are inserted.

The invention is further described by way of example only with reference to the accompanying drawings in which:

Fig. 1 is a side view of an instrument constructed in accordance with the invention, for use in the taking of blood from an animal;

Fig. 2 is a side view of the instrument of Fig. 1, the instrument being viewed rotated 90° about its axis as compared with the view of Fig. 1;

Fig. 3 is an end view of the instrument of Fig. 1;

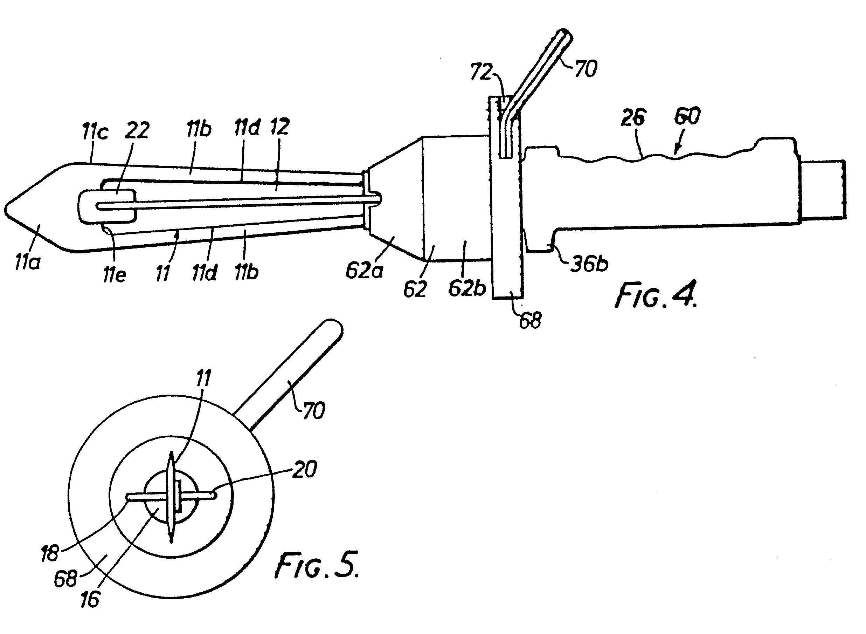

Fig. 4 is a side view of a second form of instrument constructed in accordance with the invention;

Fig. 5 is an end view of the instrument of Fig. 4;

Fig. 6 is a side view of the instrument of Fig. 4, the instrument being viewed rotated 90° about its lengthwise axis as compared with Fig. 4;

Fig. 7 is a view like Fig. 5 but showing the instrument in a condition for holding in an animal;

Fig. 8 is a diagrammatic plan view of an animal slaughtering installation constructed in accordance with the invention; and

Fig. 9 is a diagrammatic fragmentary vertical cross-section of the apparatus of Fig. 8.

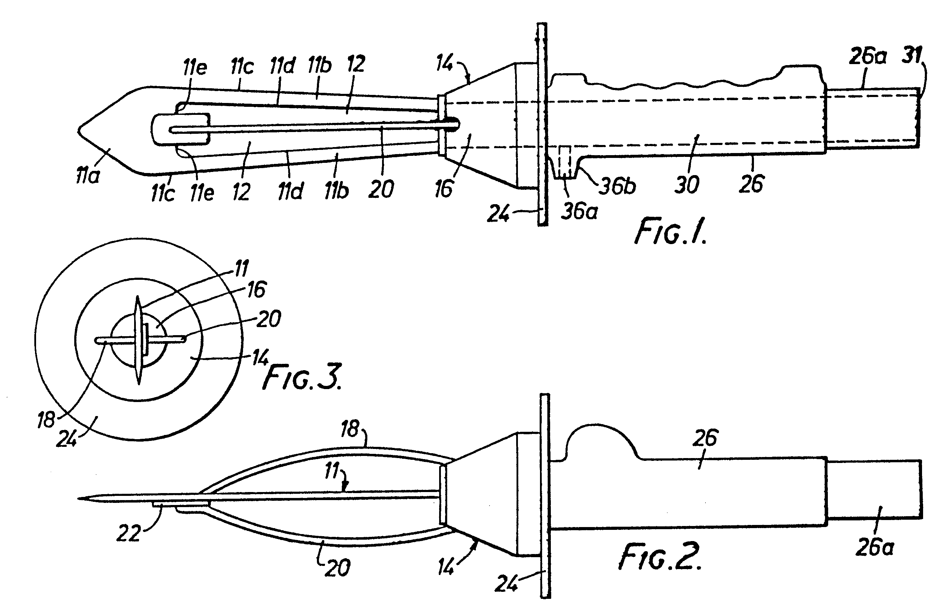

The instrument 10 of Figs. 1 to 3 comprises an elongate flat blade 11 comprising a pointed tip portion 11a of generally triangular form from the base end of which extend two spaced limb portions 11b. Limb portions 11b are coplanar with each other and with the tip portion 11a and define, with the tip portion, contiguous sharp side edges 11c of the blade. Side edges 11c diverge from the forward tip end of the blade to a widest space towards the rear of the tip portion 11a and thence converge slightly to the rear end of the blade. The inner edges 11d of the portions 11b are generally parallel to the side edges 11c and diverge from the inner end of the blade to a location at the forward end of the limb portions 11b where they join with the transverse rear edges 11e of tip portion 11a. The blade 11 therefore has a side opening 12, defined by edges 11d, 11e which opening extends from one face to the other of the blade.

Blade 11 extends from a forwardly tapered, generally frustoconical, intermediate part 14 of instrument 10, the limb portions 11b being secured to the interior of an opening 16 extending through portion 14 whereby the opening 12 in blade 11 communicates with the opening 16.

Two outwardly bowed holding elements 18, 20 are provided, these being formed from metal rod. Element 18 extends from a forward location on portion 14 to a forward location on blade 11, it being secured at its forward end to plate 22 affixed to the tip portion 11a of the blade and projecting rearwardly therefrom over part of opening 12. Holding element 20 similarly extends from a forward location on part 14 to plate 22. The holding elements 18, 20 are contained in a plane which is normal to the median plane of blade 11 and which passes through the lengthwise axis of the instrument.

Intermediate portion 14 of instrument 10 extends, from its small diameter forward end, to a rear end at which it is affixed to a circular transverse plate 24. A handle 26 extends rearwardly from plate 24. This is provided with a central passageway 30 which communicates, at one end with the opening 16 and at its rear end with an outlet opening 31. The rear end of the handle is formed as a projecting boss 26a to enable a flexible tube to be inserted thereover for communication of the tube with the passage 30. A further small passageway 30a communicating with passageway 30 opens laterally into a side boss 30b for dripping additive, in particular anticoagulant, into passageway 30.

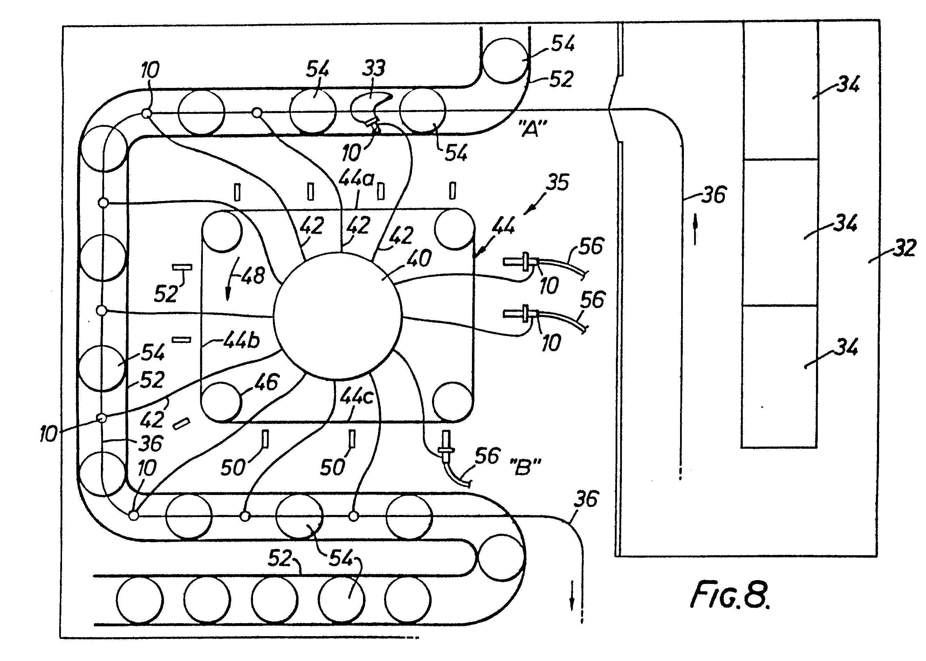

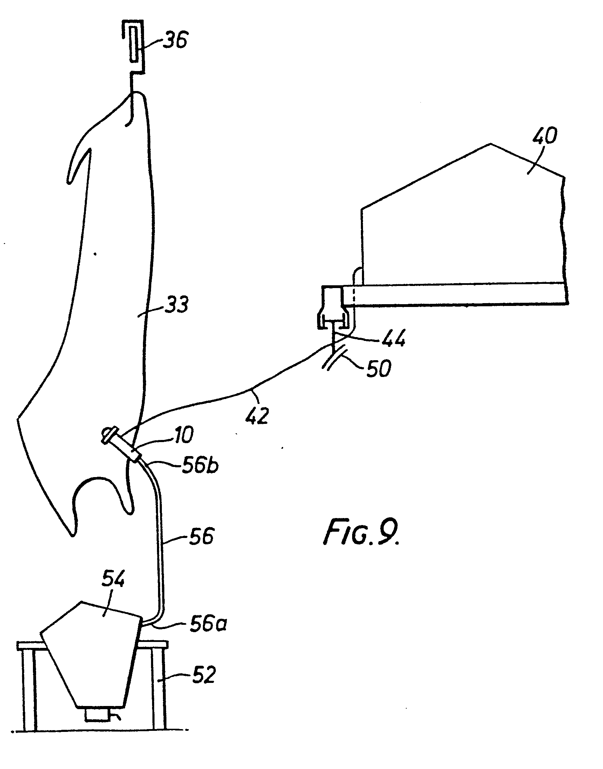

The mode of use of a plurality of instruments 10 on a continuous production line is now described with reference to Figs. 8 and 9. Thus, animals 33 to be slaughtered are passed from the race 32 to knocking boxes 34 where they are stunned by use of a captive bolt pistol or humane stunner (not shown). The animals are then hoisted by the hind legs onto a bleeding rail 36 on which they are moved sequentially through the apparatus 35. Manual stripping of the hide of each animal for about 6 inches (about 15 mm) between the forelegs follows and then an instrument 10 is thrust into the jugular vein close to the junction with the heart. As the blade 11 is inserted, the holding elements 18, 20 force apart the incision made by the blade, whilst because these elements 18, 20 are outwardly bowed and present a maximum spacing apart well forward of the rear of the blade, firm holding of the instrument on the animal is achieved. The tapered intermediate part 14 effectively seals opening 16 of the instrument such that blood from each animal passes through the passage 30 in the instrument to be collected in a container 54 which moves below the animal in the operation being effected sequentially on each animal as now described in greater detail. Thus, there are a plurality of instruments 10, these being shown diagrammatically in Fig. 8 in most instances. The boss 30b of each (Fig. 1) is affixed to a length of hose 42 which communicates with a tank 40 of liquid anticoagulant, such as sodium citrate, these hoses radiating from tank 40. An endless conveyor 44 extends in a closed rectangular loop about four guide corner rollers 46, the conveyor 44 surrounding, but being spaced from the base of the tank 40 and the hoses 42 pass through and are secured to this. Tank 40 and conveyor 44 are fitted with drive means (not shown) to rotate the tank 40 and conveyor 44 synchronously in the direction indicated by the arrow 48 in Fig. 8. In the present instance, there are twelve instruments 10 and the conveyor is fitted with a corresponding number of hoses 42 as well as a corresponding number of sterilizing devices 50 evenly spaced around conveyor 44.

Sterilizing devices 50 include a hollow body opened at one end to receive an instrument 10 and provided with an eccentric clamp arrangement to close the body about the instrument, an O-ring providing the necessary sealing relation between the devices.

As tank 40 and conveyor 44 rotate, the devices 10 and sterilizing devices 50 are moved in a circular path.

Rail 36 passes in U-shaped configuration in outwardly spaced relationship around three sides 44a, 44b and 44c of the loop presented by conveyor 44 so that animals thereon are moved on the rail around the tank and conveyor.

A further conveyor 52 is arranged beneath rail 36, being under that part of the rail which extends around the three sides 44a, 44b, 44c of conveyor 44. Conveyor 52 carries a plurality of the containers 54 and is arranged so as to sequentially move these containers below rail 36 and synchronously with the movement of animals on the rail and with the movement of instruments 10 on conveyor 44.

Each instrument carries a tube 56 affixed at one end 56b to the boss 26a of that instrument and removably affixable at the other end 56a to couplings on the containers 54 to permit blood from an animal 33, to which the instrument is attached, to flow from the instrument passage 30 to a container 54.

The operation of the apparatus is as follows:

As animals are sequentially passed to the entrance end A of the apparatus 35, that instrument 10 which is for the time being during rotation of conveyor 44, located at the entrance end is affixed to that animal as described previously. The animal's blood is then pumped, by action of the animal's heart, through that instrument 10 down the passageway 30 thereon to leave via the tube 56 of that instrument, the end 56a of such tube thereof having previously been attached to the adjacent container 54 moving under that animal so that the blood passes into that container. The animals then move around the rail 36, the rate of progress being arranged such that as they arrive at the outlet end B of the apparatus 35 all of the blood is pumped out. At the outlet end B of the apparatus an operator sequentially withdraws the instruments 10 from the animals, removes the tubes 56 from the containers 54 and places the blade end of each within that sterilizer 50 which is, at that time, adjacent the outlet end. The instruments 10 then move sequentially from the outlet end of the apparatus 35 to the entrance end, supported with the sterilizers. Within the sterilizers, the instruments are subjected to alternate flows of cold water, hot water and cold water, the hot water being at approximately 180°F (about 82° C). The anticoagulant in tank 40 is automatically metered down the hoses 42 so that a small quantity flows through the hoses 42 to the handles of the instrument 10 thence down the tube 56 for admission to each tank as it appears at the entrance end of the apparatus.

The conveyor upon which the containers 54 move is arranged to depart from the path of the rail 36 at the outlet end of the apparatus so that the animal carcasses can then be taken for normal processing away from the apparatus whilst the containers are moved sequentially past a holding container (not shown) positioned beneath the path of movement of the containers. A meat inspector inspecting carcasses moving on rail 36 from the apparatus may be provided with automatic control means enabling him to release into the storage container only blood from containers 54 corresponding to animals which he passes as satisfactory or to separate the blood for edible or non-edible usage depending on the condition of the carcasses inspected. The containers are washed for example by flushing with cold, hot and cold water in alternation, before passing back again on conveyor 52 to the entrance end A of the apparatus.

Instrument 60 which is generally similar to instrument 10, with like parts being designated by like reference numerals. However, it differs in that a modified intermediate part 62 is provided, this differing from the intermediate part 14 of the instrument 10 in that it is provided with a relatively shorter axially extending tapered portion 62a at the forward end and has a generally cylindrical rear portion 62d. Further, portion 62a is provided with two oppositely opening radially extending passageways 64 which receive outwardly pointed blades 66.

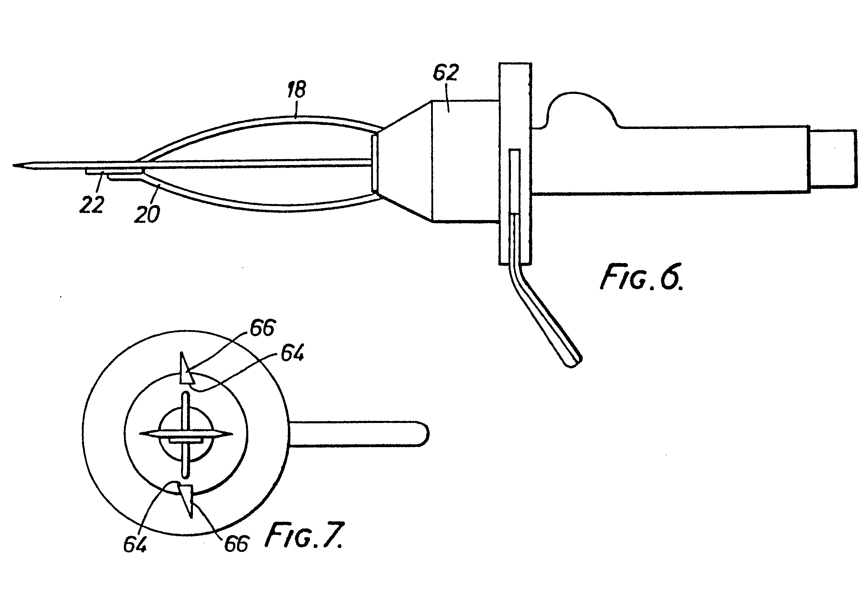

The plate 68 between the intermediate part and the handle 26 is also somewhat modified, having an outwardly projecting lever 70 which is mounted in a slot 72 for limited movement around the circumference of the plate. This lever is connected by a mechanism (not shown) to the blades 66 so that when rotated about the lengthwise axis of the instrument from the position shwon in Fig. 5 to that shown in Fig. 7 the blades are moved from positions at which they are retracted within passageway 64 to locations at which they project as shown in Fig. 7. In this instance, the instrument 60 is inserted into the animal with blades 66 retracted and the blades are then extended to assist in holding the instrument in position.

The arrangement described with respect to Figs. 8 and 9 has been advanced merely by way of explanation and many modifications may be made thereto. In relation to inspection of the carcasses, the respective blood containers may alternatively be physically associated with the carcasses at the moment of inspection or the containers may carry identifying symbols associating them with specific carcasses. A further alternative would be to pool blood from groups of containers, accepting the loss of the whole store should one carcass of the group not prove satisfactory.

The conveyor system may of course be linear rather than U-shaped or circular.

-12-

Claims:

1.      A method of collecting blood from an animal
characterized by suspending a stunned animal, stripping a portion of the hide of the animal to expose an
area adjacent a major artery or vein of the animal,
inserting a sterilized self piercing hollow instrument
through the exposed area into the vein or artery and
conducting the blood in a sterile manner from the
instrument to a container in which the blood is
thereby collected.

2.      A method according to claim 1 characterized in
that the area exposed by stripping a portion of the
hide of the animal is located between the forelegs of
the animal, said instrument being then inserted into
the jugular vein or corotid artery close to the heart.

3.      A method according to claim 1 or 2 further
characterized by removing the instrument from the
animal once collection of the blood is completed,
sterilizing the instrument and returning it down the
conveyor line for use on a subsequent animal.

4.      A method according to any preceding claims
further characterized by inspecting the condition of
the carcass of the animal following completion of blood
collection and selectively directing the blood collected in the container to one of a plurality of further
storages in dependence upon said inspection.

5.      A method according to any preceding claims
characterized by dripping an anti-coagulant into the
blood as it is collected.

6.  A method according to any preceding claim characterized in that the stunned animal is suspended from and moved with a travelling conveyor and further characterized by moving the container with the animal to permit the collecting of the blood to continue as the animal travels with the conveyor.

7.  A method according to claim 6 characterized by supporting the container on a separate conveyor system which runs substantially parallel to the conveyor line carrying the animal at least up to the point at which the instrument is removed from the animal, releasing blood from the container once collection is completed and then sterilizing the container prior to returning it to the commencement of the animal conveyor line.

8.  An instrument for taking blood from an animal characterized by a body defining a passageway therethrough and a pair of openings from the passageway to one of which a conduit may be connected, and a piercing element supported in or in advance of the other of said openings.

9.  An instrument according to claim 8 characterized in that the body is a tube, said one opening is disposed intermediate the ends of the tube and said other opening at one end of the tube and the piercing element is mounted in the tube for selective axial movement therein between an extended position projecting from said other opening to a retracted position in the tube substantially between said one opening and the other of the tube.

10.     An instrument according to claim 9 characterized in that the piercing element is carried on a rod
which extends through said other end of the tube in a
sealed relation and has an external handle to permit
manually controlled movement of the piercing element
between the extended and retracted positions.

11.     An instrument according to claim 8 characterized in that the piercing element comprises an elongate blade which projects from an end portion of the
instrument containing at least a portion of said
passageway therethrough and further characterized by
retaining means operable to oppose withdrawal of the
blade once inserted into an animal whereby the said
passageway, when brought into communication with a
view or artery of an animal by virtue of said insertion, tends to be maintained so positioned for flow
of blood from the animal through the passageway
exteriorally of the animal.

12.     An instrument according to claim 11 characterized in that the retaining means comprises a pair
of outwardly bowed rods extending from a forward part
of said end portion to locations towards the free end
of the said blade, but to opposite sides thereof.

13.     An instrument according to claim 11 or 12
characterized in that the blade comprises a pointed,
flat, tip portion with generally coplanar side edge
portions extending from the tip portion to the said
end portion of the instrument, these being spaced one
from the other to define a central opening through the
blade which opening communicates with the said passage-
way.

14.    An instrument according to claim 11, 12 or 13, characterized in that said end portion has a forwardly tapered formation from which the blade projects.

15.    An instrument according to any one of claims 11 to 14 characterized in that the rods diverge forwardly from the end portion to a maximum spacing and then converge to points where they are secured to the blade.

16.    An instrument according to any of claims 11 to 15 characterized in that the said retaining means, alternatively or additionally, comprises a pair of retractable blade elements movable from positions with the said end portion to laterally projecting positions.

17.    An instrument according to claim 16 or 17 characterized in that the blade elements are retained in transversely extending openings and biased inwardly so as normally not to project from the openings.

18.    An instrument according to claim 16 or 17 characterized in that the blade elements are movable by a lever connected to a mechanism engaging inner ends of the blade elements, the lever being movable to cause the blades to be extended to their laterally projecting positions.

19.    A sterilizing unit suitable for use with the instrument of any one of claims 11 to 18, characterized by a hollow body opened at one end to receive in sealed relation the end of the instrument which is inserted into the animal, clamp means to hold the instrument in sealed relation with the hollow body and means to selectively flush the instrument with cold, hot and cold water in sequence.

1/5

FIG.1.

FIG.2.

FIG.3.

FIG. 4.

FIG. 5.

0007327

FIG. 6.

62

18

20

22

FIG. 7.

66

64

66

64

FIG.8.

FIG.9.

## DOCUMENTS CONSIDERED TO BE RELEVANT

| Category | Citation of document with indication, where appropriate, of relevant passages | Relevant to claim |
|---|---|---|
| X | <u>DE – A – 2 035 019</u> (MARTI)<br>* Page 2, last paragraph to page 6, 3rd paragraph *<br><br>--- | 1-3,<br>5-7,<br>8-12 |
| X | <u>DE – C – 870 957</u> (STOHRER)<br>* Page 2, lines 35 to 97 *<br><br>--- | 1-3,<br>6-7 |
| X | <u>DE – C – 821 467</u> (BECK-HENKEL)<br>* Page 2, line 86 to page 3, line 6 *<br><br>--- | 1-3,<br>6-7 |
| | <u>US – A – 1 644 698</u> (WALKER)<br>* Page 1, line 102 to page 2, line 56 *<br><br>--- | 8,<br>11-12 |
| | <u>GB – A – 982 910</u> (MAUCHER)<br>* Page 2, lines 10 to 116 *<br><br>--- | 8,<br>11-14 |
| | <u>DE – B – 1 240 757</u> (MAUCHER)<br>* Column 2, line 27 to column 3, line 28 *<br><br>--- | 5,8,<br>11-14 |
| | <u>DE – C – 599 471</u> (WITZEL)<br>* Page 1, line 56 to page 2, line 25 *<br><br>--- | 9-11 |
| | <u>GB – A – 1 070 435</u> (RIZZI)<br>                                  ./. | 8,12,<br>15, |

**CLASSIFICATION OF THE APPLICATION (Int. Cl.²)**

A 22 B  5/04
A 61 L  2/04
A 61 D  1/14

**TECHNICAL FIELDS SEARCHED (Int.Cl.²)**

A 22 B
A 61 D
A 61 L

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 02-04-1979 | CRUCHTEN |

EPO Form 1503.1  06.78

**European Patent Office**

**EUROPEAN SEARCH REPORT**

Application number

EP 78 30 0167

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | * Page 2, line 110 to line 124; figure 1; page 3, lines 43 to 80; figure 4 * | 16—17 | |
| | — | | |
| | US – A – 2 178 129 (WILSON) | 16—17 | |
| | * Page 1, line 17 to page 2, line 15 * | | |
| | — | | |
| | US – A – 1 472 377 (WESCOTT) | 16—18 | TECHNICAL FIELDS SEARCHED (Int. Cl.³) |
| | * Page 2, line 70 to line 104; figures 1,2 * | | |
| | ——— | | |